# FASCICULE DE BREVET EUROPEEN

(11) **EP 1 788 682 B1**
(45) Date de publication et mention de la délivrance du brevet: **10.04.2013**
(21) Numéro de dépôt: 05360046.6
(22) Date de dépôt: 17.11.2005
(51) Int. Cl.: H02G 3/18

(54) **Support de fixation rapide pour appareillages électriques**
Schnellbefestigungshalter für elektrische Geräte
Quick fixing support for electrical apparatus

(43) Date de publication de la demande: 23.05.2007
(73) Titulaire: Berker GmbH & Co. KG, 58579 Schalksmühle (DE)
(72) Inventeur: Poli, Massimiliano, 25080 Calvagese della Riviera (Bs) (IT); Gatto, Davide, 25015 Desenzano del Garda (Bs) (IT)
(74) Mandataire: Nuss, Pierre

(56) Documents cités:
- DE-C- 539 344
- US-A- 3 440 590
- US-A- 5 116 382
- PATENT ABSTRACTS OF JAPAN vol. 1997, no. 07, 31 juillet 1997 (1997-07-31) & JP 09 060939 A (SANDEN CORP), 4 mars 1997 (1997-03-04)

## Description

La présente invention concerne le domaine des appareillages électriques, en particulier des interrupteurs et prises de courant destinés à être montés sur des boîtes d'encastrement ou dans des goulottes de distribution électrique, et a pour objet un support de fixation rapide pour de tels appareillages électriques.

Les appareillages électriques du type interrupteurs et prises de courant sont montés dans les goulottes de distribution électrique ou dans les boîtes d'encastrement au moyen de supports de fixation généralement solidarisés avec lesdits appareillages et se présentant sous forme de plaques munies de moyens de fixation, d'une part, sur les boîtes d'encastrement ou dans les goulottes de distribution électrique et, d'autre part, d'une ou de plusieurs plaques d'habillage dédiées aux différents appareillages.

Les moyens de fixation des plaques d'habillage consistent en des dispositifs d'encliquetage sous forme de logement spécifique ou de pattes élastiques destinées à coopérer avec des moyens complémentaires des plaques d'habillage et remplissent généralement leur fonction de façon satisfaisante.

Les moyens de fixation sur les boîtes d'encastrement ou dans les goulottes de distribution électrique sont sous forme de rainures longitudinales pourvues à une extrémité d'un oeillet de passage d'une tête de vis de serrage sur lesdites boîtes ou dans lesdites goulottes.

La mise en oeuvre de rainures longitudinales pourvues à une extrémité d'un oeillet de passage d'une tête de vis de serrage sur les boîtes ou dans les goulottes permet d'obvier aux inconvénients de simples perçages ou rainures, du fait que les vis de serrage peuvent rester en place dans les boîtes ou goulottes, l'oeillet d'extrémité rendant possible le montage sur les vis et un premier positionnement par rapport auxdites vis, puis un positionnement définitif par glissement du support guidé par les tiges filetées des vis.

Cependant, le déplacement du support est relativement limité, de sorte qu'un réglage correspondant ne peut également être effectué qu de manière limitée. En outre, une telle réalisation des supports de fixation, avec positionnement longitudinal ou transversal par glissement par rapport aux vis de fixation n'est pas possible dans le cas de supports pour un appareillage unique.

Il existe, certes, à cet effet, des supports munis sur leurs bords de moyen de montage provisoire, qui consistent en des rainures curvilignes munies à une extrémité d'un oeillet permettant le passage d'une tête de vis et un positionnement du support par une légère rotation. Toutefois, un tel mode de réalisation, d'une part, ne permet pas un positionnement par déplacement linéaire, parallèlement à l'un des côtés du support et, d'autre part, n'est pas adapté à un support pour plusieurs appareillages à monter en parallèle, du fait même de l'impossibilité d'un déplacement parallèle aux bords.

Enfin, il a également été proposé des supports pourvus sur leurs bords de perçages de passage de vis de fixation, la face supérieure desdits supports étant équipée d'une pièce coulissante ou pivotante munie d'un moyen de fixation provisoire sous forme d'une rainure oblongue pourvue d'un oeillet de passage de la tête de vis, dans le cas d'une pièce coulissante, ou sous forme d'une rainure curviligne ouverte prévue à l'extrémité d'un levier, dans le cas d'une pièce pivotante.

Cependant, ces supports connus ne permettent pas non plus une adaptation en position par déplacement linéaire, du fait que le passage des vis s'effectue à travers de simples perçages, dont le diamètre correspond à celui des têtes de vis, de sorte qu'un blocage en position est réalisé automatiquement à la mise en place du support.

On connaît aussi, d'une part, de JP09060939, un principe de montage utilisant un insert présentant un oeillet qui peut être glissé sous la tête d'une vis, et, d'autre part, de US 2 440 590, un principe de montage où un rivet déformable peut être inséré dans une ouverture oblongue puis déformé de sorte à y être bloqué.

La présente invention a pour but de pallier ces inconvénients en proposant un support de fixation rapide pour des appareillages électriques tels que des interrupteurs et des prises de courant, destinés à être montés sur des boîtes d'encastrement ou dans des goulottes de distribution électrique, pouvant être mis en oeuvre de manière rapide et simple et permettant un réglage en position par déplacement parallèlement à ses bords.

A cet effet, le support de fixation rapide conforme à l'invention, qui se présente sous forme d'une pièce plane pourvue d'une ouverture de passage d'un ou de plusieurs appareillages électriques est caractérisé en ce qu'il est muni sur au moins deux bords parallèles de cette ouverture, d'une part, d'au moins un évidement de forme oblongue de passage pour une tête de vis et, d'autre part, sur chacun de ses bords d'un moyen mobile de blocage provisoire d'au moins une tête de vis, après montage de ladite pièce plane.

L'invention sera mieux comprise, grâce à la description ci-après, qui se rapporte à un mode de réalisation préféré, donné à titre d'exemple non limitatif, et expliqué avec référence au dessin schématique annexé, dans lequel :
la figure 1 est une vue en perspective d'un support de fixation rapide conforme à l'invention, et
la figure 2 est une vue partielle en coupe, à plus grande échelle, suivant A-A de la figure 1, au droit d'une vis de fixation, en position de serrage d'un support.

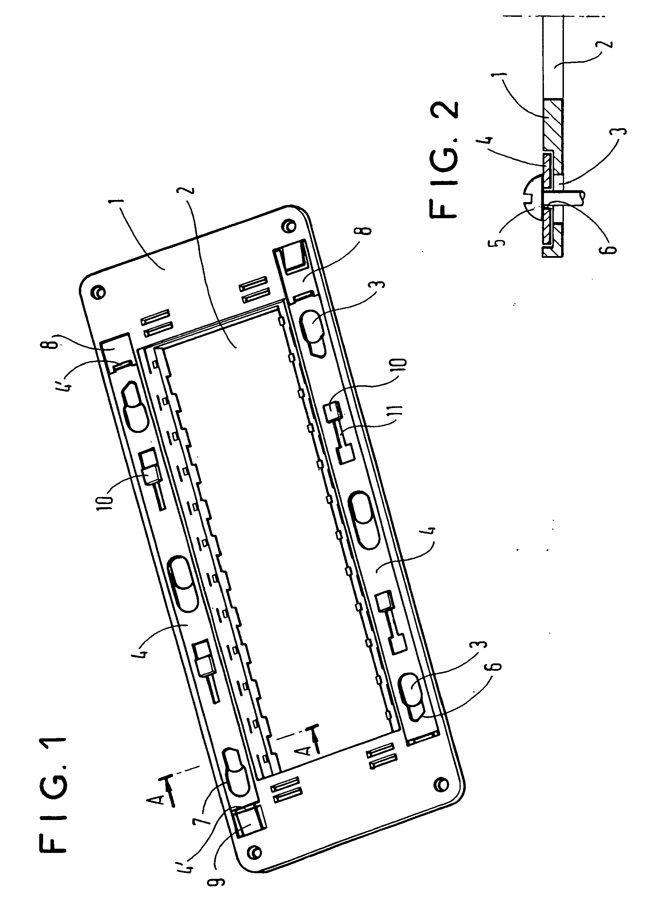

La figure 1 du dessin annexé représente un support de fixation rapide pour des appareillages électriques, tels que des interrupteurs et des prises de courant, destinés à être montés sur des boîtes d'encastrement ou dans des goulottes de distribution électrique, qui se présente sous forme d'une pièce plane 1 pourvue d'une ouverture 2 de passage d'un ou de plusieurs appareillages électriques.

Conformément à l'invention, cette pièce plane 1 est munie sur au moins deux bords parallèles de son ouverture 2, d'une part, d'au moins un évidement de forme oblongue 3 de passage pour une tête de vis et, d'autre part, sur chacun de ses bords d'un moyen mobile 4 de blocage provisoire d'au moins une tête de vis, après montage de ladite pièce plane 1. De préférence, les bords parallèles sont munis de plusieurs évidements de forme oblongue 3.

Les évidements de forme oblongue 3 de passage pour une tête de vis s'étendent préférentiellement le long des bords longitudinaux de la pièce plane 1, de part et d'autre de l'ouverture 2 et à intervalles réguliers. Ainsi, il est possible de prévoir plusieurs vis de fixation 5 (figure 2) traversant les évidements 3 en vue de la fixation de la pièce plane 1. Du fait de la forme oblongue des évidements 3, il apparaît clairement que la pièce plane 1 peut subir un déplacement longitudinal de réglage de position sur une boîte d'encastrement ou dans une goulotte de distribution électrique.

L'invention est uniquement décrite en regard de la représentation de la figure 1, avec prévision de moyens de fixation le long de deux bords parallèles de la pièce plane 1, en l'occurrence le long des bords longitudinaux. Il est, cependant, évident que de tels moyens de fixation peuvent également être prévus le long des deux bords perpendiculaires aux premiers, à savoir le long des bords latéraux, d'une part, au moins un évidement de forme oblongue 3 de passage pour une tête de vis et, d'autre part, sur chacun de ses bords latéraux un moyen mobile 4 de blocage provisoire d'au moins une tête de vis.

Chaque moyen mobile 4 de blocage provisoire d'au moins une tête de vis 5 se présente avantageusement sous forme d'un élément mobile allongé et plat, guidé à coulissement sur le bord correspondant de la pièce plane 1 et muni d'au moins une rainure oblongue de largeur inférieure à celle de l'évidemment oblong 3 prévu sur le bord correspondant de la pièce plane 1, cette rainure oblongue 6 étant pourvue à une extrémité d'un passage élargi 7 en forme d'oeillet, dont le diamètre est au moins égal à la largeur de l'évidemment oblong 3 et permet le passage d'une tête de vis 5.

L'élément mobile allongé et plat formant le moyen mobile 4 est préférentiellement guidé dans le bord correspondant de la pièce plane 1 par l'intermédiaire d'un logement 8 de longueur supérieure à celle du moyen 4, ce logement 8 étant pourvu à une extrémité d'un dispositif de maintien par pression 9 coopérant avec la face inférieure de l'extrémité correspondante du moyen mobile 4 en position de service de ce dernier. Par ailleurs, chaque logement 8 est pourvu d'au moins un moyen 10 de retenue et de guidage complémentaire coopérant avec au moins un moyen correspondant de guidage 11 prévu sur l'élément mobile formant le moyen mobile 4.

Dans le mode de réalisation représenté à la figure 1 du dessin annexé, le moyen 10 de retenue et de guidage complémentaire se présente sous forme d'un ergot à tête élargi solidaire de la pièce plane 1 et solidarisé par une partie de liaison de moindre largeur avec la pièce plane 1, cette partie de moindre largeur formant un guide coopérant avec une rainure formant le guidage 11 du moyen mobile 4. De manière connue, il est prévu, dans un tel cas, à une extrémité du guidage 11 une ouverture de dimension suffisante pour permettre la mise en place dudit moyen 4 sur la pièce plane 1, par introduction au-dessus de l'ergot formant le moyen 10 de retenue et de guidage complémentaire. Généralement une telle mise en place s'effectue uniquement lors de la fabrication et il n'est pas prévu de démontage ultérieur.

Le dispositif de maintien par pression 9, coopérant avec la face inférieure de l'extrémité correspondante du moyen mobile 4 en position de service de ce dernier, se présente préférentiellement sous forme d'une patte élastique ménagée à l'extrémité du logement 8 correspondant à la position de service du moyen mobile 4. Ainsi, le moyen mobile 4 peut être déplacé dans une position de blocage provisoire par coulissement dans le logement 8, avec un frottement très faible, donc sous un effort très faible, seule l'arrivée dans une position de service, c'est-à-dire une position dans laquelle est assurée un blocage de la pièce plane 1 par rapport aux vis de fixation 5, occasionnant un déplacement plus difficile du moyen mobile 4 correspondant à un appui de son extrémité contre le dispositif de maintien par pression 9.

Pour permettre un actionnement aisé du moyen mobile 4, en déplacement dans son logement 8 de la pièce plane 1, l'élément mobile allongé et plat formant ledit moyen mobile 4 est avantageusement pourvu à chaque extrémité d'une patte 4' d'actionnement au moyen d'une lame de tournevis ou analogue.

La figure 2 du dessin annexé représente la pièce plane 1 dans une position de blocage provisoire, c'est-à-dire une position dans laquelle la pièce plane 1 ne peut plus être soulevée de l'élément sur lequel elle doit être fixée, du fait que le moyen mobile 4 s'engage par sa rainure oblongue 6 autour de la tige filetée de la vis 5 et sous la tête de la vis 5.

La figure 1 représente la pièce plane 1 avec deux positions différentes du moyen mobile 4, à savoir une position permettant la mise en place sur une un boîtier ou dans une goulotte, qui correspond à la représentation du moyen 4 du bord inférieur de la pièce plane 1, et une position de service, représentée par la position du moyen mobile 4 sur le bord supérieur de la pièce plane 1. Ainsi, pour la mise en place de la pièce plane 1, il suffit de réaliser préalablement un déplacement du moyen mobile 4 de manière à disposer l'oeillet 7 prolongeant la rainure oblongue 6 correspondant à chaque évidement oblong 3 des bords de la pièce plane 1 au-dessus dudit évidement 3, de telle manière que la pièce plane 1 peut être mise en place sur une goulotte ou un boîtier avec passage de la tête de vis 5 à travers lesdits évidement 3 et oeillet 7, jusqu'à application contre la face externe de la goulotte ou du boîtier. Il suffit alors de déplacer le moyen mobile 4, par action sur la patte 4' opposée à l'oeillet 7, de manière à amener le moyen mobile 4 sous la tête de vis 5, dont la tige filetée est alors entourée par les bords de la rainure oblongue 6 correspondante. Il s'ensuit que la pièce plane 1 est bloquée dans sa position de montage et peut être serrée définitivement dans cette position par un serrage complémentaire de chaque vis 5.

En outre, du fait de la coopération, pour le blocage en position, de l'évidement oblong 3 et de la rainure oblongue 6, il existe une possibilité de réglage longitudinal de la pièce plane 1, c'est-à-dire un déplacement suivant son axe longitudinal, permettant une adaptation du support de fixation rapide et des appareillages montés sur ce dernier, en position, sur un boîtier d'encastrement ou dans une gaine de distribution.

Selon une variante de réalisation de l'invention, non représentée au dessin annexé, il est également possible de prévoir que les évidements oblongs 3 des bords de la pièce plane 1 présentent une largeur identique à celle des rainures oblongues 6 des moyens mobiles 4 et qu'ils soient pourvus à une extrémité d'un oeillet analogue à l'oeillet 7 desdites rainures oblongues 6, lesdits oeillets des évidements oblongs 3 et des rainures oblongues 6 étant superposés, dans la position de la pièce plane 1 avant montage, pour permettre le passage d'une tête de vis de fixation, et les évidements oblongs 3 et les rainures oblongues 6 s'étendant en direction opposée par rapport aux oeillets. Ainsi, il est possible d'effectuer un déplacement de réglage plus important de la pièce plane 1 sur un boîtier ou dans une goulotte, à savoir de part et d'autre du point de montage sur les vis de fixation, le blocage définitif étant assuré par déplacement du moyen mobile 4.

La description ci-dessus ne s'étend pas aux moyens de fixation d'un ou de plusieurs appareillages dans l'ouverture 2, ni au moyen de fixation d'une ou de plusieurs plaques d'habillage, ces moyens étant connus en eux-mêmes et ne faisant pas partie de la présente invention.

Grâce à l'invention il est possible de réaliser un support de fixation rapide pour appareillage permettant une mise en oeuvre aisée et rapide, ainsi qu'une possibilité de réglage par rapport à au moins un axe, parallèlement aux bords d'une boîte d'encastrement ou d'une goulotte.

Bien entendu, l'invention n'est pas limitée au mode de réalisation décrit et représenté au dessin annexé. Des modifications restent possibles, notamment du point de vue de la constitution des divers éléments ou par substitution d'équivalents techniques, sans sortir pour autant du domaine de protection de l'invention.

## Revendications

1. Support de fixation rapide pour des appareillages électriques tels que des interrupteurs et des prises de courant, destinés à être montés sur des boites d'encastrement ou dans des goulottes de distribution électrique, se présentant sous forme d'une pièce plane (1) pourvue d'une ouverture (2) de passage d'un ou de plusieurs appareillages électriques, **caractérisé en ce qu'**il est muni sur au moins deux bords parallèles de cette ouverture (2), d'une part, d'au moins un évidement de forme oblongue (3) de passage pour une tête de vis (5) et, d'autre part, sur chacun de ses bords d'un moyen mobile (4) de blocage provisoire d'au moins une tête de vis (5), après montage de ladite pièce plane (1), pour permettre un réglage en position par déplacement parallèlement aux bords du support.

2. Support de fixation rapide, suivant la revendication 1, **caractérisé en ce que** les bords parallèles sont munis de plusieurs évidements de forme oblongue (3).

3. Support de fixation rapide, suivant l'une quelconque des revendications 1 et 2, **caractérisé en ce que** les évidements de forme oblongue (3) de passage pour une tête de vis s'étendent le long des bords longitudinaux de la pièce plane (1), de part et d'autre de l'ouverture (2) et à intervalles réguliers.

4. Support de fixation rapide, suivant l'une quelconque des revendications 1 à 3, **caractérisé en ce qu'**il est également pourvu, le long des deux bords perpendiculaires aux premiers, à savoir le long des bords latéraux, d'au moins un évidement de forme oblongue (3) de passage pour une tête de vis et, sur chacun de ses bords latéraux, d'un moyen mobile (4) de blocage provisoire d'au moins une tête de vis.

5. Support de fixation rapide, suivant l'une quelconque des revendications 1 et 4, **caractérisé en ce que** chaque moyen mobile (4) de blocage provisoire d'au moins une tête de vis (5) se présente sous forme d'un élément mobile allongé et plat, guidé à coulissement sur le bord correspondant de la pièce plane (1) et muni d'au moins une rainure oblongue de largeur inférieure à celle de l'évidemment oblong (3) prévu sur le bord correspondant de la pièce plane (1), cette rainure oblongue (6) étant pourvue à une extrémité d'un passage élargi (7) en forme d'oeillet, dont le diamètre est au moins égal à la largeur de l'évidemment oblong (3) et permet le passage d'une tête de vis (5).

6. Support de fixation rapide, suivant la revendication 5, **caractérisé en ce que** l'élément mobile allongé et plat formant le moyen mobile (4) est guidé dans le bord correspondant de la pièce plane (1) par l'intermédiaire d'un logement (8) de longueur supérieure à celle du moyen (4), ce logement (8) étant pourvu à une extrémité d'un dispositif de maintien par pression (9) coopérant avec la face inférieure de l'extrémité correspondante du moyen mobile (4) en position de service de ce dernier.

7. Support de fixation rapide, suivant la revendication 6, **caractérisé en ce que** chaque logement (8) est pourvu d'au moins un moyen (10) de retenue et de guidage complémentaire coopérant avec au moins un moyen correspondant de guidage (11) prévu sur l'élément mobile formant le moyen mobile (4).

8. Support de fixation rapide, suivant la revendication 7, **caractérisé en ce que** le moyen (10) de retenue et de guidage complémentaire se présente sous forme d'un ergot à tête élargi solidaire de la pièce plane (1) et solidarisé par une partie de liaison de moindre largeur avec la pièce plane (1), cette partie de moindre largeur formant un guide pour une rainure formant le guidage (11) du moyen mobile (4).

9. Support de fixation rapide, suivant la revendication 6, **caractérisé en ce que** le dispositif de maintien par pression (9), coopérant avec la face inférieure de l'extrémité correspondante du moyen mobile (4) en position de service de ce dernier, se présente sous forme d'une patte élastique ménagée à l'extrémité du logement (8) correspondant à la position de service du moyen mobile (4)

10. Support de fixation rapide, suivant l'une quelconque des revendications 1, 4 à 6, 8 et 9, **caractérisé en ce que** l'élément mobile allongé et plat formant le moyen mobile (4) est pourvu à chaque extrémité d'une patte (4') d'actionnement au moyen d'une lame de tournevis ou analogue.

11. Support de fixation rapide, suivant les revendications 1, 4 et 5, **caractérisé en ce que** les évidements oblongs (3) des bords de la pièce plane (1) présentent une largeur identique à celle des rainures oblongues (6) des moyens mobiles (4) et sont pourvus à une extrémité d'un oeillet analogue à l'oeillet (7) desdites rainures oblongues (6), lesdits oeillets des évidements oblongs (3) et des rainures oblongues (6) étant superposés, dans la position du support (1) avant montage, pour permettre le passage d'une tête de vis de fixation, et **en ce que** les évidements oblongs (3) et les rainures oblongues (6) s'étendent en direction opposée par rapport aux oeillets.

## Claims

1. Quick fixing support for electrical apparatus such as switches and sockets, designed to be installed on electrical flush-mounting boxes or distribution trunking, taking the form of a flat part (1) provided with an opening (2) for the passage of one or more pieces of electrical apparatus, **characterized in that** it is furnished on at least two parallel edges of this opening (2), on the one hand, with at least one recess (3) of oblong shape for the passage of a screw head (5) and, on the other hand, on each of its edges, with a movable means (4) for temporarily immobilizing at least one screw head (5), after installation of the said flat part (1) in order to allow a positional adjustment by movement parallel to the edges of the support.

2. Quick fixing support, according to Claim 1, **characterized in that** the parallel edges are furnished with several oblong-shaped recesses (3).

3. Quick fixing support, according to either one of Claims 1 and 2, **characterized in that** the oblong-shaped recesses (3) for the passage of a screw head extend along the longitudinal edges of the flat part (1), on either side of the opening (2) and at regular intervals.

4. Quick fixing support, according to any one of Claims 1 to 3, **characterized in that** it is also provided, along the two edges perpendicular to the first, namely along the lateral edges, with at least one oblong-shaped recess (3) for the passage of a screw head and, on each of its lateral edges, with a movable means (4) for temporarily immobilizing at least one screw head.

5. Quick fixing support, according to any one of Claims 1 to 4, **characterized in that** each movable means (4) for temporarily immobilizing at least one screw head (5) takes the form of an elongate and flat movable element guided slidingly on the corresponding edge of the flat part (1) and furnished with at least one oblong groove of lesser width than that of the oblong recess (3) provided on the corresponding edge of the flat part (1), this oblong groove (6) being provided at one end with an eyelet-shaped widened passageway (7), of which the diameter is at least equal to the width of the oblong recess (3) and allows the passage of a screw head (5).

6. Quick fixing support, according to Claim 5, **characterized in that** the elongate and flat movable element forming the movable means (4) is guided in the corresponding edge of the flat part (1) by means of a housing (8) of length greater than that of the means (4), this housing (8) being provided at one end with a pressure-based retention device (9) interacting with the lower face of the corresponding end of the movable means (4) in the service position of the latter.

7. Quick fixing support, according to Claim 6, **characterized in that** each housing (8) is provided with at least one complementary retaining and guiding means (10) interacting with at least one corresponding guiding means (11) provided on the movable element forming the movable means (4).

8. Quick fixing support, according to Claim 7, **characterized in that** the complementary retaining and guiding means (10) takes the form of a pin with an enlarged head secured to the flat part (1) and secured by a connecting portion of lesser width to the flat part (1), this portion of lesser width forming a guide for a groove forming the guidance (11) of the movable means (4).

9. Quick fixing support, according to Claim 6, **characterized in that** the pressure-based retention device (9), interacting with the lower face of the corresponding end of the movable means (4) in the service position of the latter, takes the form of an elastic lug arranged at the end of the housing (8) corresponding to the service position of the movable means (4).

10. Quick fixing support, according to any one of Claims 1, 4 to 6, 8 and 9, **characterized in that** the elongate and flat movable element forming the movable means (4) is provided at each end with a lug (4') for actuation by means of a screwdriver blade or similar element.

11. Quick fixing support, according to Claims 1, 4 and 5, **characterized in that** the oblong recesses (3) of the edges of the flat part (1) have a width identical to that of the oblong grooves (6) of the movable means (4) and are provided at one end with an eyelet similar to the eyelet (7) of the said oblong grooves (6), the said eyelets of the oblong recesses (3) and of the oblong grooves (6) being superposed, in the position of the support (1) before installation, in order to allow the passage of a fixing screw head, and **in that** the oblong recesses (3) and the oblong grooves (6) extend in the direction away from the eyelets.

## Patentansprüche

1. Schnellverbindungsträger für elektrische Vorrichtungen wie Schalter und Steckdosen, die ausgelegt sind, an Einbaugehäusen oder in Kanälen für elektrische Kabel montiert zu werden, wobei der Schnellverbindungsträger die Form eines ebenen Teils (1) aufweist, das mit einer Durchführungsöffnung (2) für eine oder mehrere elektrische Vorrichtungen versehen ist, **dadurch gekennzeichnet, dass** der Schnellverbindungsträger an wenigstens zwei parallelen Rändern der Öffnung (2) einerseits mit wenigstens einer länglichen Durchgangsaussparung (3) für einen Schraubenkopf (5) und andererseits auf jedem seiner Ränder mit wenigstens einem verschiebbaren Mittel (4) für eine zeitweilige Arretierung wenigstens eines Schraubenkopfs (5) nach der Montage des ebenen Teils (1) versehen ist, um eine Positionsverstellung durch Parallelverschiebung an den Rändern des Trägers zu ermöglichen.

2. Schnellverbindungsträger nach Anspruch 1, **dadurch gekennzeichnet, dass** die parallelen Ränder mit mehreren länglichen Aussparungen (3) versehen sind.

3. Schnellverbindungsträger nach einem der Ansprüche 1 und 2, **dadurch gekennzeichnet, dass** die länglichen Durchgangsaussparungen (3) für einen Schraubenkopf sich entlang der Längsränder des ebenen Teils (1) auf beiden Seiten der Öffnung (2) in regelmäßigen Abständen erstrecken.

4. Schnellverbindungsträger nach einem der Ansprüche 1 bis 3, **dadurch gekennzeichnet, dass** entlang der beiden Ränder senkrecht zu den ersten, nämlich entlang den Seitenrändern, ebenfalls wenigstens eine längliche Durchgangsaussparung (3) für einen Schraubenkopf und auf jedem seiner Seitenränder ein verschiebbares Mittel (4) zur zeitweiligen Arretierung wenigstens eines Schraubenkopfs vorgesehen ist.

5. Schnellverbindungsträger nach einem der Ansprüche 1 bis 4, **dadurch gekennzeichnet, dass** jedes verschiebbare Mittel (4) zur zeitweiligen Arretierung wenigstens eines Schraubenkopfs (5) die Form eines langgestreckten und ebenen verschiebbaren Elements aufweist, das gleitbar auf dem entsprechenden Rand des ebenen Teils (1) geführt und mit wenigstens einer länglichen Nut mit einer geringeren Breite als der der länglichen Aussparung (3), die auf dem entsprechenden Rand des ebenen Teils (1) vorgesehen ist, versehen ist, wobei diese längliche Nut (6) an einem Ende mit einem erweiterten Durchgang (7) in Form einer Öse versehen ist, bei der der Durchmesser wenigstens gleich der Breite der länglichen Öffnung (3) ist und den Durchgang eines Schraubenkopfs (5) ermöglicht.

6. Schnellverbindungsträger nach Anspruch 5, **dadurch gekennzeichnet, dass** das langgestreckte und ebene verschiebbare Element, das das verschiebbare Mittel (4) bildet, auf dem entsprechenden Rand des ebenen Teils (1) mittels eines Sitzes (8) mit einer größeren Länge als der des Mittels (4) geführt wird, wobei der Sitz (8) an einem Ende mit einem Druckhaltemittel (9) versehen ist, das mit der unteren Seite des entsprechenden Endes des verschiebbaren Mittels (4) in Betriebsposition von letzterem wechselwirkt.

7. Schnellverbindungsträger nach Anspruch 6, **dadurch gekennzeichnet, dass** jeder Sitz (8) mit wenigstens einem komplementären Rückhalte- und Führungsmittel (10) versehen ist, welches mit wenigstens einem entsprechenden Führungsmittel (11), das auf dem verschiebbaren Element, das das verschiebbare Mittel (4) bildet, vorgesehen ist, wechselwirkt.

8. Schnellverbindungsträger nach Anspruch 7, **dadurch gekennzeichnet, dass** das komplementäre Rückhalte- und Führungsmittel (10) die Form eines Zapfens mit erweitertem Kopf aufweist und zusammen mit dem ebenen Teil (1) ausgebildet ist und mit dem ebenen Teil (1) über einen Verbindungsabschnitt geringerer Breite verbunden ist, wobei dieser Abschnitt geringerer Breite eine Führung für eine Nut bildet, die die Führung (11) des verschiebbaren Elements (4) bildet.

9. Schnellverbindungsträger nach Anspruch 6, **dadurch gekennzeichnet, dass** das Druckhaltemittel (9), das mit der unteren Seite des entsprechenden Endes des verschiebbaren Mittels (4) in Betriebsposition von letzterem wechselwirkt, eine elastische Lasche aufweist, die an dem Ende des Sitzes (8) entsprechend der Betriebsposition des verschiebbaren Mittels (4) eingerichtet ist.

10. Schnellverbindungsträger nach einem der Ansprüche 1, 4 bis 6, 8 und 9, **dadurch gekennzeichnet, dass** das langgestreckte und ebene verschiebbare Element, das das mobile Mittel (4) bildet, an jedem Ende mit einer Lasche (4') für eine Betätigung mittels einer Schraubendreherklinge oder dergleichen versehen ist.

11. Schnellverbindungsträger nach einem der Ansprüche 1, 4 und 5, **dadurch gekennzeichnet, dass** die länglichen Aussparungen (3) der Ränder des ebenen Teils (1) die gleiche Breite aufweisen wie die der länglichen Nuten (6) des verschiebbaren Mittels (4) und an einem Ende mit einer Öse entsprechend der Öse der länglichen Nuten (6) versehen sind, wobei die Ösen der länglichen Aussparung (3) und der länglichen Nuten (6) in der Position des Trägers (1) vor der Montage überlagert sind, um den Durchgang eines Fixierungsschraubenkopfes zu ermöglichen, und dass die länglichen Aussparungen (3) und die länglichen Nuten (6) sich in entgegengesetzte Richtungen bezüglich der Ösen erstrecken.
